# EUROPEAN PATENT APPLICATION

(11) **EP 4 686 724 A1**
(43) Date of publication of application: **04.02.2026**
(21) Application number: 24382856.3
(22) Date of filing: 01.08.2024
(51) Int. Cl.: C07F 15/04

(54) **METHOD FOR THE DEUTERATION OF SILANES AND PINACOLBORANE**

(71) Applicant: Consejo Superior De Investigaciones Científicas (CSIC), 28006 Madrid (ES)
(72) Inventor: Rodríguez Iglesias, María Amor, Sevilla (ES); Jiménez Rioboo, Rafael, Sevilla (ES); Álvarez Rodríguez, Lucía, Sevilla (ES)
(74) Representative: Pons IP

(57) **Abstract**

The present invention relates to a method for the deuteration of organic compounds, particularly the deuteration of silanes (primary, secondary, and tertiary), as well as of the particular borane "pinacolborane", by reacting deuterium gas (D₂) and said silanes and/or borane at certain deuteration reaction conditions in the presence of a deuteration reaction catalyst which is an organometallic complex comprising Ni (II) and an organic ligand comprising phosphorous and boron.

## Description

The present invention relates to a method for the deuteration of organic compounds, particularly the deuteration of silanes (primary, secondary, and tertiary), as well as of the particular borane "pinacolborane", by reacting deuterium gas (D₂) and said silanes and/or borane at certain reaction conditions, in the presence of a deuteration reaction catalyst which is an organometallic complex comprising Ni (II) and an organic ligand comprising phosphorous and boron.

### STATE OF THE ART

Deuterium-labeled compounds are of great importance due to their usefulness in chemical research and the food and pharmaceutical industry. Replacement of hydrogen for deuterium in an organic entity provides valuable information of reaction mechanisms in biological and chemical processes, while maintaining their chemical structure and biological activity virtually unchanged. They are also very effective for quantitative analysis and bioanalytical investigations as internal standards for mass spectrometry. In medical chemistry, the use of deuterium instead of hydrogen can affect the metabolism of deuterated drugs with beneficial effects on safety, tolerability and efficacy. In fact, the US Food and Drug Administration approval of the first deuterated drug in 2017 serves as an important stimulus for the development of this field with direct implications in our lives [Mullard A., Nat. Rev. Drug Discov. 2016, 15, 219-221; Frank S. etal., JAMA. 2016, 316, 40-50].

Deuterated silanes can be used as efficient reagents to incorporate deuterium atoms into organic molecules via addition reactions to unsaturated carbon-carbon and carbon-heteroatom bonds, and to reduce carbon-halogen bonds, including non-reactive C-F bonds. However, the synthetic protocols associated with their synthesis suffer from environmental problems due to the generation of significant amounts of waste from the stoichiometric reaction of chlorosilanes with metal deuterides such as NaBD₄ or LiAlD₄ [Gilbert, J.C. et al., J. Org. Chem. 1985, 50, 2586-2587]. Alternatively, catalysts for hydrogen-deuterium (H/D) exchange of silanes, using D₂ as the deuterium source, have been developed based on precious metals in recent years such as Rh [Campos, J. et al., Labelled Compd. Radiopharm. 2012, 55, 29-38], Ir [Iluc, V. M. et al., Organometallics 2012, 31, 39-41], Ru [Smart, K. A. et al., Adv. Synth. Catal. 2014, 356, 759-764], and Pt [Kratish, Y. et al., ACS Omega 2017, 2, 372-376].

Although most of these systems are restricted to the use of tertiary silanes, rhodium and platinum catalysts reported by the groups of Carmona [Campos, J., Am. Chem. Soc. 2010, 132, 16765-16767] and Apeloig [Kratish, Y. et al., ACS Omega 2017, 2, 372-376] were shown to be active also for primary and secondary silanes.

Catalysts of other metals for the deuteration of silanes have also been tried, for example a catalyst based on a Fe β-diketiminato complex (Linford-Wood, T. G. etal., Catal. 2022, 12, 2979-2985) which can deuterate primary and secondary silanes, but not tertiary silanes; a Co catalyst based on a Co complex containing amido-imidazolidin-2-imine ligands or analogous Fe catalysts (Reshi, N. U D. et al., ACS Catalysis 2024, 14, 1759-1772), etc.

Other methods make use of deuterated-benzene (C₆D₆) instead of deuterium gas (D₂) for the deuteration of silanes, such as for example [Schmidt, D. et al., Dalton Trans., 2014, 43, 10816].

All in all, there is a need for an alternative and successful method for the deuteration of silanes which overcomes the limitations of the state of the art, such as being able to deuterate a wide variety of silanes (primary, secondary, tertiary) using the same reaction conditions, avoiding the use of precious metal catalysts, and being able to provide high enough deuteration rates.

### DESCRIPTION OF THE INVENTION

The present invention refers to a method for the deuteration of primary, secondary, and tertiary hydrosilanes, as well as the particular borane, pinacolborane ((CH₃)₄C₂O₂BH). The method uses deuterium gas (D₂) as a reactant, as well as an organometallic complex as a deuteration catalyst, for the deuteration reaction of the hydrosilanes or pinacolborane. The organometallic complex contains nickel (II) as well as an organic ligand comprising phosphorous and boron known as "PBP". In short, the method comprises reacting the reactants (hydrosilanes and deuterium gas) in the presence of the organometallic catalyst, under specific conditions of temperature, pressure, and time.

In a first aspect, the present invention relates to a method for the deuteration of primary, secondary, tertiary hydrosilanes, or pinacolborane, comprising:
reacting the hydrosilane or pinacolborane, previously dissolved in a solvent selected from benzene (C₆H₆), deuterated benzene (C₆D₆), toluene (C₆H₅CH₃), pentane (C₅H₁₂), hexane (C₆H₁₄), cyclohexane (C₆H₁₂), or their combinations; with deuterium gas (D₂), in the presence of a catalyst, at a temperature between 25-55 °C and a pressure between 1-6 bar, for at least 2 hours, wherein the catalyst is a complex of general formula (I): 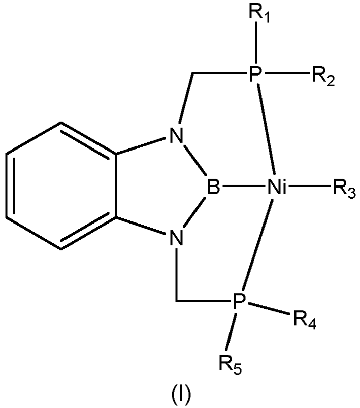
wherein R₁, R₂, R₄, and R₅ are independently selected from C₁-C₆ alkyl, cycloalkyl, or aryl; and R₃ is selected from H and C₁-C₆ alkyl.

The term "C₁-C₆ alkyl", in the present invention, refers to saturated, linear or branched hydrocarbon chains, having between 1 and 6 carbon atoms, for example, methyl (Me), ethyl (Et), n-propyl, i-propyl, n-butyl (nBu), tert-buty (tBu), sec-butyl, n-pentyl, n-hexyl, etc. Preferably, the alkyl group has between 1 and 4 carbon atoms (C₁-C₄ alkyl).

The term "aryl" refers to aromatic monocyclic and polycyclic rings with six to fourteen ring carbon atoms (e.g., C₆-C₁₄), for example, but without limitation, phenyl group (Ph).

The term "cycloalkyl" refers to and includes, saturated monocyclic and polycyclic rings with 3 to 12 ring carbon atoms and includes for example, bur without limitation, cyclopropyl, cyclopentyl, or cyclohexyl.

Preferably, each R₁, R₂, R₄, and R₅ can be equal or different among them, and R₁, R₂, R₄, and R₅ are independently selected from C₁-C₄ alkyl, phenyl, cyclopentyl and cyclohexyl.

In another preferred embodiment, R₁, R₂, R₄, and R₅ are the same group and more preferably are selected from tert-butyl, isopropyl, phenyl, cyclopentyl and cyclohexyl.

In another preferred embodiment, R₃ is H or C₁-C₄alkyl. More preferably R₃ is H.

The mixture to be deuterated which comprises the hydrosilane (or pinacolborane) to be deuterated, as well as the catalyst (organometallic complex of formula (I)), before the deuteration reaction, is dissolved in a solvent capable of dissolving both compounds (the compound to be deuterated and the catalyst), so that a homogeneous solution of the reactants in the solvent is achieved. This solvent can be any solvent known in the state of the art which is known to dissolve both compounds, and which preferably does not interact with the deuteration reaction which will later take place in the presence of deuterium at 1-6 bar. Non-limiting examples of such solvents are benzene (C₆H₆), deuterated benzene (C₆D₆), toluene (C₆H₅CH₃), pentane (C₅H₁₂), hexane (C₆H₁₄), cyclohexane (C₆H₁₂), etc. A mixture of several solvents can also be used as the solvent, as long as it can dissolve the reactants.

In another preferred embodiment, the complex of general formula (I) is an organometallic complex which contains a PBP ligand and Ni(II) (^{tBu}PBPNiH), having the following chemical formula:

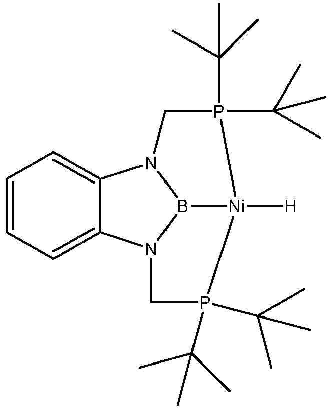

The method of the invention can deuterate all kinds of hydrosilanes (primary, secondary, and tertiary) with high deuteration rates (conversions ranging from 54-99% for all hydrosilanes tested), as well as the particular borane "pinacolborane", using the same steps and reaction conditions for all these compounds. Moreover, the method is simple and relatively short, and does not require specialized equipment to be carried out.

The term "silane" refers to a charge-neutral organic compound with the general formula SiR₄, wherein each one of four R substituents can be organic or inorganic atoms or groups.

"Hydrosilanes" refer to silanes which contain at least a hydrogen atom as R substituent. The hydrosilanes can be primary, secondary or tertiary.

"Primary hydrosilanes" refer to hydrosilanes of formula RSiH₃ wherein the silicon atom is bonded to three hydrogen atoms, for example, but without limitation, n-hexylsilane, PhSiH₃, ⁿBuSiH₃, CH₃-(CH₂)₅-SiH₃.

"Secondary hydrosilanes" refer to "hydrosilanes" of formula R₂SiH₂ wherein the silicon atom is bonded to two hydrogen atoms for example, but without limitation, Et₂SiH₂, PhMeSiH₂, Ph₂SiH₂, ^{t}Bu₂SiH₂.

"Tertiary hydrosilanes" refer to hydrosilanes of formula R₃SiH wherein the silicon atom is bonded to a single hydrogen, for example, but without limitation, Ph₃SiH, Et₃SiH, PhMe₂SiH, Ph₂MeSiH, (Me₃SiO)₃SiH, and C₆H₄[SiH(CH₃)₂]₂.. "

"Deuteration" is defined as the substitution of any hydrogen of a compound, in the present invention of a hydrosilane or pinacolborane, by a deuterium (²H or D) atom.

"Deuterated silanes" are silanes containing deuterium (²H or D), and are widely useful for the deuteration of other organic compounds, in order to manufacture "deuterated organic compounds", with wide applications (for chemical research, food sector, pharmaceutical sector, etc.).

Therefore, in hydrosilanes the hydrogen will be noted as H (example Et₂SiH₂), while in their deuterated form, the deuterium hydrogen which substitutes the original hydrogen will be noted as D (for example Et₂SiH₁D₁ or Et₂SiD₂).

An "organometallic complex" or "metalorganic complex" according to the invention refers to an organic compound which presents at least one metallic compound within its chemical structure and a metal-carbon or metal-hydrogen bond.

As an illustrative non-limiting example, a hydrosilane (for example Et₂SiH₂) can be deuterated according to the method of the invention into its deuterated forms (Et₂SiH₁D₁ or Et₂SiD₂ or their mixtures).

Non-limiting examples of hydrosilanes which have been deuterated with the aforementioned method are: Et₃SiH (tertiary silane, deuteration up to 96%), PhMeSiH₂ (secondary silane, deuteration up to 94%) or n-hexylsilane (primary silane, deuteration up to 94%).

According to the method of the first aspect invention, compounds to be deuterated are added into a container o reactor, within which the deuteration reaction will be carried out. According to the method, such compounds are primary, secondary, or tertiary hydrosilanes, pinacolborane, or their combinations, achieving a simple and high deuteration (of at least 50%) of the aforementioned compounds.

Preferably, before the addition of the compounds to be deuterated, vacuum is applied to the container or reactor, via one or more vacuum cycles, in order to ensure that no gases are present which might interfere and hamper the deuteration reaction. Hence, the deuterium (1-6 bar of pressure) is preferably added to the container or reactor when such vessel is in vacuum or near vacuum conditions (that is with no gas present and a pressure close to 0 bar).

According to the method of the first aspect of the invention, the complex of formula (I) is added to the container or reactor. Such complex comprises nickel (II) and the organic ligand PBP which contains phosphorous and boron. This complex acts as a catalyst of the deuteration reaction between the compounds added in step a) and D₂ gas.

According to the method of the first aspect invention, deuterium gas (D₂) is added to the container or reactor. Such D₂ gas can be added and be left inside the reactor statically or can be recirculated throughout the reactor by means of conducts or pipelines (dynamic flow of D₂). In the case that the container or reactor originally contained a D₂ atmosphere, adding D₂ inside the reactor is not required.

According to the method of the invention, certain conditions of temperature and pressure are set within the container or reactor, allowing time to pass so that the deuteration reaction between the hydrosilanes (and/or pinacolborane) and D₂ occurs, in the presence of the catalyst of formula (I). The reaction temperature is comprised between 25°C and 55°C, the reaction pressure is comprised between 1 bar and 6 bar, and the reaction time is at least 2 hours, preferably 4 hours, in order to ensure a high deuteration of at least 50%. Moreover, it was noticed that for the particular cases of Et₂SiH₂, PhMeSiH₂ and Ph₂SiH₂, after reaction for 2h at room temperature, the achieved H/D exchange was between 50 and 62%). After the reaction time, the deuteration reaction of the compounds (hidrosylanes and/or pinacolborane) has been carried out, so that the final product of interest, namely the deuterated compound/s, are obtained.

The container or reactor within which the deuteration reaction is carried out, may or may not be sealed, being preferably sealed from the external atmosphere. Such container or reactor might also be open and hence in contact with an external atmosphere, as long as such atmosphere does not contain oxygen. The external atmosphere may have any pressure, being for example atmospheric pressure or 1 atm, equivalent to 1,013 bar.

The 1-5% mol catalyst concentration refers to the quantity of catalyst with respect to the other components, or in other words, the molar ratio of the catalyst with respect to the hydrosilane or pinacolborane. As a non-limiting and illustrative example in order to help understand "% mol catalyst", a 2% mol catalyst concentration refers to the use of 0.004 mmoles of catalyst for 0.2 mmoles of silane (0.004 being 2% of 0.2).

The container or reactor, such as the NMR tube or the Fischer-Porter tube, may be of any size and shape.

Optionally, the deuterated compounds are extracted from the container or reactor, alongside the non-deuterated compounds and the organometallic catalyst.

After the extraction of the deuterated compounds from the reactor, extracted as a mixture with other compounds (non-deuterated compounds and catalyst), it is preferable to carry out an additional separation step (or steps) in which the deuterated compounds of interest are separated from the other compounds (non-deuterated compounds, catalyst, etc.), hence obtaining the deuterated compounds of interest with higher purity. Such separation step can be carried out by any means of separation known in the state of the art, such as distillation as a non-limiting example. A non-limiting example of separation by distillation, would be to transfer the mixture to a H-distillation tube and separate the deuterated compounds from the catalyst by vacuum distillation, for example at -20 °C with volatile silanes.

The deuterated compounds (deuterated silanes or pinacolborane) were finally characterized in order to find out the % of deuteration (substitution of initial H in the compound by D). Spectroscopic yield is determined by ¹H NMR spectroscopy using the following parameters for each spectrum ns = 4 and d1 = 10 at room temperature, by comparing Si-H to hexamethyldisilane (HMDSO) as the internal standard after finishing the reaction (at least 2 h at room temperature, preferably 4h at room temperature).

In another preferred embodiment, the complex of general formula (I) is present at a concentration ranging from 1% to 5% mol with respect to the hydrosilane or pinacolborane. Preferably the concentration ranging from 2% to 5% mol with respect to the hydrosilane or pinacolborane The use of the catalyst in said concentration provides the advantage that the degree of deuteration is highly optimized within this range.

In another preferred embodiment, the deuterium gas (D₂) is present at least in 13% weight with respect to the weight of the hydrosilane or pinacolborane. The presence of at least a 6 % weight of D₂ (in contrast to using lower quantities of deuterium gas) provides the advantage that the achieved deuteration is higher (for example, using 6% deuterium yields an 83 % conversion rate for Et₂SiH₂ hydrosilane in 19 hours), in contrast to using for example 3 % deuterium which only yields 72% conversion at the same reaction conditions.

In another preferred embodiment, the pressure during the deuteration reaction is between 2 bar to 4 bar.

In another preferred embodiment, the reaction time of the deuteration reaction is between 2 and 4 hours, which allows to obtain deuterations higher than 50% for secondary silanes while using relatively short reaction times.

In another preferred embodiment, the reaction time of the deuteration reaction is at least 4 hours, and preferably at least 19 hours. The advantage of carrying the deuteration reaction for at least 4 hours, preferably at least 19 hours, is that for reaction vessels which use a low amount of D2 (as low as 3 % weight of deuterium with respect to the other components), such as RMN tubes as a non-limiting example, such longer reaction times allow to obtain deuterations for hydrosilanes higher than 80%, for example a deuteration of 83% for the secondary hydrosilane Et₂SiH₂ after reaction at ambient temperature, 4 bars, and 19 hours, as a non-limiting example.

In another preferred embodiment, the reactor or container within which the deuteration reaction is carried out is a valve NMR tube (for example of Volume 1.5 mL). This is a specific type of tube reactor which is a colorless quartz tube, provided with a quick pressure valve for the flow or retention of the D₂ gas (the flow or amount of deuterium used can be determined by the pressure, for example a D2 pressure between 1bar and 6 bar), which simplifies catalytic work reaction at different pressure and temperature conditions. Using a valve NMR tube as the reactor in the deuteration method of the invention provides not only the aforementioned simplicity advantage, but also allows to follow the deuteration reaction in situ.

Moreover, it was observed that the evacuation of the headspace of the NMR tube and the replenishment of the deuterium atmosphere did not significantly increase the deuterium incorporation.

As a non-limiting and illustrative example, a valve NMR reactor of a volume as low as 1.5 mL, and up to 3 mL, can still result in satisfactory high degrees of deuteration (up to 70%).

In another preferred embodiment, the reactor or container within which the deuteration reaction is carried out is a Fisher-Porter reactor. This reactor has a higher volume (than the NMR tube) (6-20 mL), and hence allows to add more deuterium as well as to deuterate a higher volume of hydrosilanes (for example 0.2 mmol), hence obtaining a higher incorporation of the deuterium into the hydrosilanes.

Throughout the description and the claims, the word "comprises" and its variants do not intend to exclude other technical features, additives, components or steps. For those skilled in the art, other objects, advantages and features of the invention may be partially deduced from both the description and the implementation of the invention. The following examples and figures are provided by way of illustration and are not intended to limit the present invention.

### BRIEF DESCRIPTION OF THE FIGURES

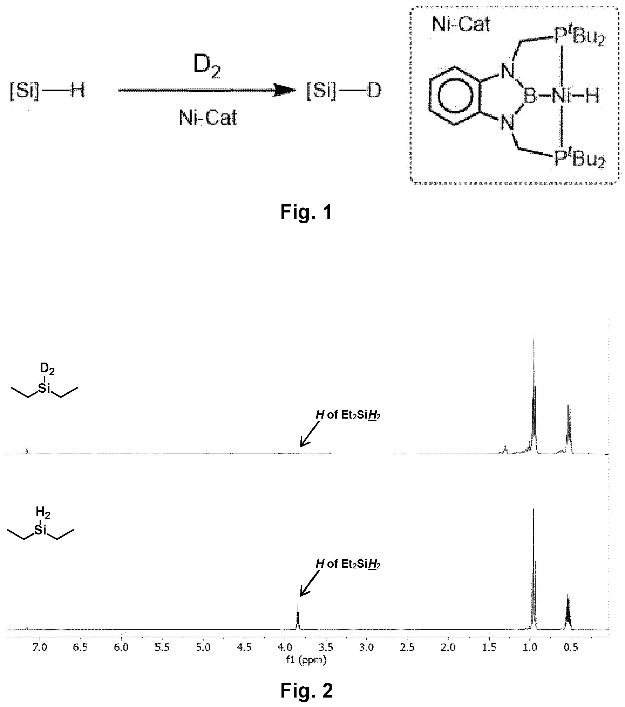

**Figure 1****.-** Scheme of the deuteration reaction of a hydrosilane ([Si]-H) in the presence of deuterium and a nickel catalyst according to the invention, resulting in the deuterated silane ([Si]-D).
**Figure 2****.-** ¹H NMR spectrum of the secondary non-deuterated Et₂SiH₂ as well as the secondary deuterated Et₂SiD₂, remaining after the deuteration reaction carried out on Et₂SiH₂ according to the conditions of Example 4, under deuterium gas at room temperature (25 °C for 4 hours), in the presence of catalyst ^{tBu}PBPNiH, thus obtaining deuterated Et₂SiD₂.

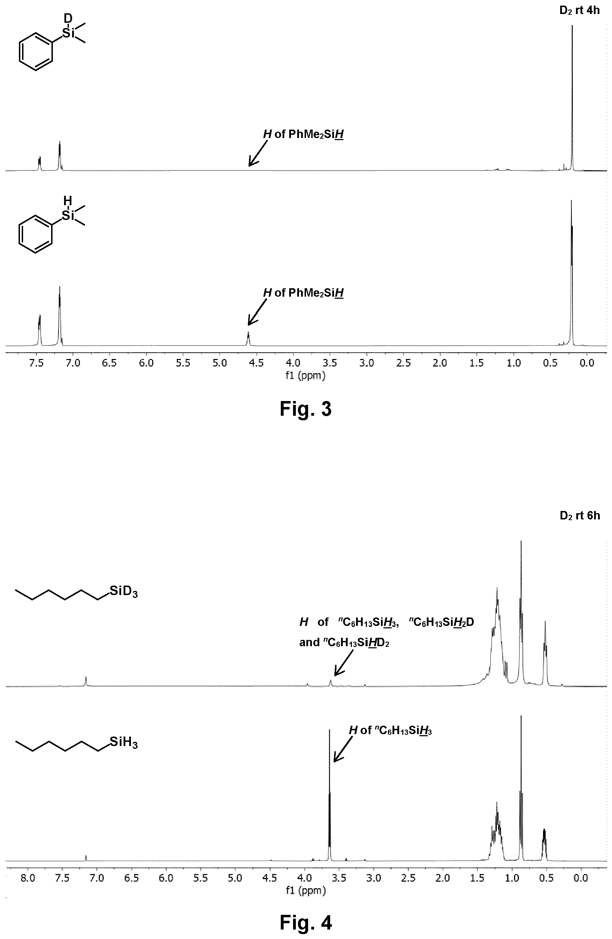

**Figure 3****.-** ¹H NMR spectrum of the tertiary non-deuterated PhMe₂SiH as well as the tertiary deuterated PhMe₂SiD, remaining after the deuteration reaction carried out on Et₂SiH₂ according to the conditions of Example 10, under deuterium gas at room temperature (25 °C for 4 hours), in the presence of catalyst ^{tBu}PBPNiH, thus obtaining deuterated PhMe₂SiD.
**Figure 4****.-** ¹H NMR spectrum of the primary non-deuterated *ⁿ*C₆H₁₃SiH₃ as well as the primary deuterated *ⁿ*C₆H₁₃SiD₃, remaining after the deuteration reaction carried out on *ⁿ*C₆H₁₃SiH₃ according to the conditions of Example 12, under deuterium gas at room temperature (25 °C for 4 hours), in the presence of catalyst ^{tBu}PBPNiH, thus obtaining deuterated *ⁿ*C₆H₁₃SiD₃.

### EXAMPLES

The method of the invention will be illustrated by the following examples in which the inventors carried out the deuteration method starting from different silanes or pinacolborane, in the presence of D₂ gas and the organometallic complex catalyst (^{tBu}PBPNiH) described in Chem. Commun., 2014, 50, 15718, showcasing the efficiency in the deuteration of secondary hydrosilanes, tertiary hydrosilanes, primary hydrosilanes, and pinacolborane, respectively.

The general deuteration method of the invention is illustrated in Fig. 1.

### Secondary hydrosilanes:

### Example 1

First of all, 2 mg of the catalyst ^{tBu}PBPNiH at a concentration 5% mol. (with respect to the hydrosilane), were dissolved in 0.4 mL of C₆D₆, and the solution was introduced in a J. Young valve NMR tube of 1.5 mL. Then, 7 mg of the secondary hydrosilane Et₂SiH₂ were added to the NMR tube with a micro syringe to the tube. Moreover, 2 bar (2039 g/cm²) of D₂ gas were introduced in the J. Young valve NMR tube of 1.5 mL (which served as the reactor where the deuteration of the hydrosilane took place). The reaction conditions were room temperature (25 °C) and 2 bar, for a period of 19 hours, after which the deuterated hydrosilane was obtained. The degree of deuteration of the obtained deuterated hydrosilane (Et₂SiD₂) was characterized by proton nuclear magnetic resonance (¹H NMR), wherein more precisely the characterization involved adding hexamethyldisilane (HMDSO) and determining the spectroscopic yield by ¹H NMR spectroscopy, by integration of the residual Si-H resonance and the CH₃ of the internal standard. It was measured that a 72% deuterium incorporation was achieved for this secondary hydrosilane.

### Example 2

This example follows the same methodology as Example 1, with the exception that the deuteration reaction was carried out at a pressure of 4 bar (instead of 2 bar). An 83% deuterium incorporation was achieved for this secondary hydrosilane Et₂SiD₂.

### Example 3

This example follows the same methodology as Example 2, with the exception that the added ^{tBu}PBPNiH catalyst had a lower concentration of 1% mol. (instead of 5% mol.). An 80% deuterium incorporation was achieved for this secondary hydrosilane.

### Example 4

This example follows the same methodology as Example 1, with the exception that the added ^{tBu}PBPNiH catalyst had a lower concentration of 2% mol. (instead of 5% mol.) and a Fisher-Porter tube of 20 mL (instead of a valve NMR tube of 1.5 mL) and 18 mg, 0.2 mmol of Et₂SiH₂ instead of 7 mg, 0.08 mmol were used as the container within which the deuteration reaction was carried out for a period of 4 hours. A 99% deuterium incorporation was achieved for this secondary hydrosilane Et₂SiD₂.

### Example 5

This example follows the same methodology as Example 4, with the exception that the hydrosilane to be deuterated was the aliphatic secondary hydrosilane PhMeSiH₂ (instead of Et₂SiH₂). A 94% deuterium incorporation was achieved for this secondary hydrosilane PhMeSiD₂.

### Example 6

This example follows the same methodology as Example 4, with the exception that the hydrosilane to be deuterated was the aromatic secondary hydrosilane Ph₂SiH₂ (instead of Et₂SiH₂). A 95% deuterium incorporation was achieved for this secondary hydrosilane Ph₂SiD₂.

### Example 7

This example follows the same methodology as Example 4, with the exception that the hydrosilane to be deuterated was the bulkier secondary hydrosilane ^{t}Bu₂SiH2 (instead of Et₂SiH₂), wherein ^{t}Bu stands for tert-butyl ligands. A 54% deuterium incorporation was achieved for this secondary hydrosilane ^{t}Bu₂SiD₂.

### Example 8

In a glove box, diethylsilane Et₂SiH₂ (0.100 g, 1.13 mmol) and the catalyst ^{tBu}PBPNiH (0.011, 0.022 mmol) were mixed in 2 mL of deuterobenzene (C₆D₆) in a fisher-porter vessel (60 mL). Then, the fisher-porter vessel was degassed via three freeze-pump-thaw cycles, in order to create vacuum inside the fisher-porter vesel. Afterwards, the fisher-porter tube was backfilled with D₂ gas (2 bar). The mixture was stirred at room temperature (25 °C) for 6 hours, turning from dark yellow to yellow after 30 min. The mixture was transferred to a H-distillation tube and separated from the catalyst ^{tBu}PBPNiH by vacuum distillation at -20 °C (isolated yield 60%). Hexamethyldisilane (HMDSO) (20%) was added to the hydrosilanes mixture, and then it was determined by 1H NMR spectroscopy that the resulting deuterated silane (Et₂SiD₂) presented high (98%) deuterium incorporation.

### Tertiary hydrosilanes:

### Example 9

This example follows the same methodology as Example 4, with the exception that the hydrosilane to be deuterated was the tertiary hydrosilane Ph₃SiH (instead of Et₂SiH₂). A 94% deuterium incorporation was achieved for this tertiary hydrosilane Ph₃SiD.

### Example 10

This example follows the same methodology as Example 4, with the exception that the hydrosilane to be deuterated was the tertiary hydrosilane Et₃SiH (instead of Et₂SiH₂). A 96% deuterium incorporation was achieved for this tertiary hydrosilane Et₃SiD.

### Example 11

This example follows the same methodology as Example 4, with the exception that the hydrosilane to be deuterated was the tertiary hydrosilane PhMe₂SiH (instead of Et₂SiH₂). A 97% deuterium incorporation was achieved for this tertiary hydrosilane PhMe₂SiD.

### Example 12

This example follows the same methodology as Example 4, with the exception that the hydrosilane to be deuterated was the tertiary hydrosilane Ph₂MeSiH (instead of Et₂SiH₂). A 96% deuterium incorporation was achieved for this tertiary hydrosilane Ph₂MeSiD.

### Primary hydrosilanes:

### Example 13

This example follows the same methodology as Example 4, with the exception that the hydrosilane to be deuterated was the primary hydrosilane n-hexylsilane (instead of Et₂SiH₂) and 6h. A 98% deuterium incorporation was achieved for this primary hydrosilane ⁿHexSiD₃ (ⁿHexSiHD₂ 1%; ⁿHexSiH₂D < 1%).

### Example 14

This example follows the same methodology as Example 4, with the exception that the hydrosilane to be deuterated was the primary hydrosilane PhSiH₃ (instead of Et₂SiH₂). An 57% deuterium incorporation was achieved for this primary hydrosilane PhSiD₃, (PhSiHD₂ 2 %; PhSiH₂D < 1%).

### Example 15

This example follows the same methodology as Example 4, with the exceptions that pinacolborane was used as the compound to be deuterated (instead of a hydrosilane). With only 4 hours under these reaction conditions, full deuteration (99% DBpin) was achieved.

In contrast, no deuteration was observed for the conditions of examples 1-15 if there was no organometallic complex catalyst comprising Ni(II) and PBP present. In fact, both a ^{tBu}PBP ligand without nickel, and the nickel(II) compound (DME)NiBr₂ without a PBP ligand, were used as possible catalysts, but no deuteration was observed.

Also, in contrast, no deuteration was observed for the silanes of examples 1-15 if deuterium benzene C₆D₆ (instead of D₂ gas) was used as the deuterium source.

## Claims

1. A method for the deuteration of primary, secondary, tertiary hydrosilanes, or pinacolborane, comprising:
reacting the hydrosilane or pinacolborane, previously dissolved in a solvent selected from benzene (C₆H₆), deuterated benzene (C₆D₆), toluene (C₆H₅CH₃), pentane (C₅H₁₂), hexane (C₆H₁₄), cyclohexane (C₆H₁₂), or their combinations; with deuterium gas (D₂), in the presence of a catalyst, at a temperature between 25-55 °C and a pressure between 1-6 bar, for at least 2 hours, wherein the catalyst is a complex of general formula (I): 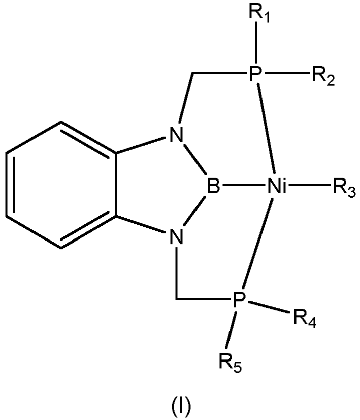 wherein:
R₁, R₂, R₄, and R₅ are independently selected from C₁-C₆ alkyl, aryl or cycloalkyl; and
R₃ is selected from H and C₁-C₆ alkyl.

2. The method according to claim 1, wherein R₁, R₂, R₄, and R₅ are independently selected from C₁-C₄ alkyl, phenyl, cyclopentyl and cyclohexyl.

3. The method according to any one of claims 1 or 2, wherein R₁, R₂, R₄, and R₅ are the same group and are selected from tert-butyl, isopropyl, phenyl, cyclopentyl and cyclohexyl.

4. The method according to any one claims 1 to 3, wherein R₃ is H or C₁-C₄alkyl.

5. The method according to any one of claims 1 to 4, wherein R₃ is H.

6. The method according to any one of claims 1 to 5, wherein the complex of formula (I) is the compound:

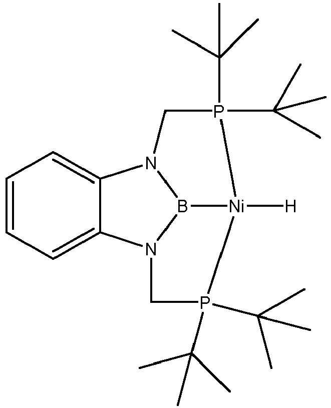

7. The method according to any one of claims 1 to 6, wherein the hydrosilane is selected from PhSiH₃, n-hexylsilane, Et₂SiH₂, PhMeSiH₂, Ph₂SiH₂, ^{t}Bu₂SiH₂, Ph₃SiH, Et₃SiH, PhMe₂SiH, Ph₂MeSiH, ⁿBuSiH₃, (Me₃SiO)₃SiH, CH₃-(CH₂)₅-SiH₃ and C₆H₄[SiH(CH₃)₂]₂.

8. The method according to any one of claims 1 to 7, wherein the complex of formula (I) is present at a concentration ranging from 1% to 5% mol with respect to the hydrosilane or pinacolborane, preferably from 2% to 5% mol.

9. The method according to any one of claims 1 to 8, wherein the deuterium gas (D₂) is present at least in 6 % weight with respect to the weight of the hydrosilane or pinacolborane.

10. The method according to any one of claims 1 to 9, wherein further comprises separating the deuterated hydrosilane or pinacolborane from the other compounds.
